(19) Europäisches Patentamt

European Patent Office

Office européen des brevets

(11) **EP 1 089 191 A1**

(12) **DEMANDE DE BREVET EUROPEEN**

(43) Date de publication:
**04.04.2001 Bulletin 2001/14**

(51) Int Cl.⁷: **G06F 17/00**, G06T 15/50,
A45D 44/00

(21) Numéro de dépôt: **00402701.7**

(22) Date de dépôt: **29.09.2000**

| | |
|---|---|
| (84) Etats contractants désignés:<br>**AT BE CH CY DE DK ES FI FR GB GR IE IT LI LU**<br>**MC NL PT SE**<br>Etats d'extension désignés:<br>**AL LT LV MK RO SI** | (72) Inventeurs:<br>• **Aubert, Johan**<br>**75010 Paris (FR)**<br>• **Dauga, Christophe**<br>**75011 Paris (FR)** |
| (30) Priorité: **29.09.1999 FR 9912137** | (74) Mandataire: **Tanty, François**<br>**Nony & Associés,**<br>**3, rue de Penthièvre**<br>**75008 Paris (FR)** |
| (71) Demandeur: **L'OREAL**<br>**75008 Paris (FR)** | |

(54) **Dispositif d'aide au maquillage**

(57) Dispositif d'aide au maquillage, caractérisé par le fait qu'il comporte :

- une unité de mesure (2) de phénomènes locaux d'interaction de la lumière avec une zone à maquiller et/ou à traiter,
- une base (14) de données relatives à la BRDF de différents produits cosmétiques et/ou de soin,
- des moyens de sélection (10) permettant de sélectionner un produit,

- des moyens de calcul (13) pour calculer la BRDF résultante de la zone virtuellement maquillée ou traitée avec ce produit, à partir des mesures précédemment effectuées et d'informations relatives à la BRDF du produit de maquillage sélectionné, provenant de ladite base (14) de données, et
- des moyens de visualisation (20, 40) de la zone ainsi virtuellement maquillée ou traitée en fonction de la BRDF résultante précédemment calculée.

FIG.1

## Description

La présente invention concerne un dispositif d'aide au maquillage.

On connaît, notamment par la demande internationale WO 96/21201, un dispositif comportant une unité d'acquisition permettant d'acquérir une image 2D d'un visage et des moyens de traitement d'image afin de visualiser l'application virtuelle sur ce visage d'un produit de maquillage.

Par ailleurs, le magazine The Nikkei Weekly du 21 décembre 1998 fait état de travaux permettant la visualisation d'une image 3D d'un visage maquillé.

Les dispositifs connus ne permettent pas de tenir compte, entre autres, des conditions d'éclairage dans lesquelles va évoluer le sujet maquillé.

En particulier, une personne peut se maquiller chez elle sous un éclairage artificiel et évoluer ensuite en extérieur, de sorte que le rendu du maquillage va être différent.

Enfin, les dispositifs connus sont mal adaptés à simuler l'application d'un produit de maquillage peu couvrant, transparent ou faiblement diffusant, et ne tiennent pas compte des phénomènes physiques d'interaction de la lumière entre la peau et le produit cosmétique.

Ainsi la simulation de l'application de produits de maquillage brillants ou satinés n'est pas satisfaisante.

Il existe un besoin pour simuler l'application d'un produit de maquillage en prenant en compte l'ambiance lumineuse dans laquelle la personne maquillée va évoluer, et permettre ainsi à une personne de se maquiller ou de choisir son maquillage en fonction d'une ambiance lumineuse particulière.

L'invention a notamment pour objet un dispositif d'aide au maquillage permettant de simuler aisément et d'une manière réaliste l'application d'un produit donné, sur le visage par exemple, pour diverses conditions d'éclairage.

Le nouveau dispositif d'aide au maquillage selon l'invention se caractérise par le fait qu'il comporte

- une unité de mesure de phénomènes locaux d'interaction de la lumière avec zone à maquiller et/ou à traiter,
- une base de données relatives à la BRDF de différents produits cosmétiques et/ou de soin,
- des moyens de sélection permettant de sélectionner un produit,
- des moyens de calcul pour calculer la BRDF résultante de la zone virtuellement maquillée ou traitée avec ce produit, à partir des mesures précédemment effectuées et d'informations relatives à la BRDF du produit de maquillage sélectionné, provenant de ladite base de données, et
- des moyens de visualisation de la zone ainsi virtuellement maquillée ou traitée en fonction de la BRDF résultante précédemment calculée.

La BRDF (fonction de distribution de la réflectance bidirectionnelle - *Bidirectional Reflectance Distribution Function* en anglais) est une fonction bien connue des spécialistes en images de synthèse, dépendant de plusieurs paramètres géométriques et physiques liés à la source de lumière employée, à la nature de la cible illuminée et aux conditions d'illumination et d'observation.

Cette fonction permet notamment de prendre en compte l'angle d'incidence de la lumière, l'angle d'observation, la nature de la peau qui est illuminée et son aspect de surface.

Grâce à l'invention, on peut simuler l'application virtuelle d'un produit cosmétique et/ou de soin en tenant compte notamment du fait que la couleur en un point du visage dépend de l'étendue géométrique de la source lumineuse, donc des directions d'incidence de la lumière sur la surface éclairée, des caractéristiques spectrales de cette lumière, de la nature de la surface éclairée et de la direction d'observation de celle-ci.

Le dispositif d'aide au maquillage selon l'invention permet ainsi de prendre en considération les aspects goniochromatiques du produit de maquillage et/ou de soin utilisé, notamment l'évolution de sa réflectance, de sa transparence et de sa couvrance en fonction de la direction d'observation.

L'invention permet encore de tenir compte de la diffusion de la lumière au travers du produit.

L'invention permet donc de simuler des effets optiques propres au produit de maquillage utilisé, tels que par exemple la matité, la brillance ou l'irisation.

Dans une mise en oeuvre préférée de l'invention, le dispositif comporte des moyens de calculs agencés pour calculer des paramètres de la BRDF de la zone à maquiller et/ou à traiter à partir des mesures effectuées.

Ainsi, on peut se contenter d'un nombre relativement limité de points de mesure au sein de la zone à maquiller ou à traiter, les paramètres de la BRDF étant déterminés par les moyens de calcul à partir des mesures effectuées.

De préférence, les paramètres servant au calcul de la BRDF sont les coefficients d'absorption $\mu_a (\lambda)$, de diffusion $\mu_s (\lambda)$, d'anisotropie de la diffusion g, l'indice de réfraction n $(\lambda)$ et le coefficient de rugosité m, $\lambda$ étant la longueur d'onde de la lumière.

Avantageusement, les paramètres $\mu_a (\lambda)$ et $\mu_s (\lambda)$ de la peau sont calculés en utilisant un modèle faisant intervenir comme variables le taux de mélanine dans l'épiderme, le taux de sang dans le derme et son degré d'oxydation.

2

Dans une réalisation particulière, le dispositif d'aide au maquillage comporte un organe de commande permettant à l'utilisateur d'entrer des informations liées à la manière dont le produit cosmétique est destiné à être appliqué sur le visage.

Cet organe de commande peut comprendre une souris à retour de force.

Ainsi, l'utilisateur peut déterminer lui-même l'intensité du maquillage en exerçant une force plus ou moins grande sur l'organe de commande.

On parvient de cette manière à simuler le maquillage au moyen d'un crayon par exemple, lequel lorsqu'il est plus ou moins fortement appliqué sur la peau laisse une marque colorée plus ou moins intense, correspondant à des épaisseurs et à des densités de produit plus ou moins grandes.

Avantageusement, le dispositif d'aide au maquillage comporte un système expert qui à partir de données renseignées par l'utilisateur, sélectionne en fonction de critères prédéterminés un produit de maquillage, dans le but par exemple d'accorder la couleur du maquillage à celle des yeux ou des cheveux de l'utilisateur.

On peut se référer à ce sujet à la demande de brevet européen EP-A-0 646 339 par exemple.

Avantageusement, les moyens de visualisation comportent des moyens d'affichage stéréoscopiques, de façon à accroître le réalisme de la simulation.

Dans une réalisation particulière, l'unité de mesure comporte une sphère munie de moyens d'illumination du sujet présent dans la sphère et de moyens d'acquisition d'images agencés pour permettre l'acquisition de données locales du sujet à traiter.

L'unité de mesure peut comporter un dispositif d'acquisition de la topographie du visage choisi parmi les dispositifs suivants : dispositif de stéréovision avec acquisition simultanée par exemple d'une vue de profil et d'une vue de face ; dispositif de triangulation par laser ; dispositif de projection de franges.

L'unité de mesure comporte avantageusement un dispositif d'acquisition de la réflectance spectrale du visage permettant de connaître la couleur du visage en un ensemble de points, pour un angle d'illumination et une direction d'observation donnés.

L'unité de mesure peut détecter des dyschromies, par exemple de la couperose ou des taches pigmentaires.

La base de données relatives à la BRDF de produits cosmétiques et/ou de soin comporte avantageusement des données relatives à la BRDF de produits choisis dans la liste suivante : fonds de teints, rouges à lèvres, fards à joues, fards à paupières, mascara, vernis à ongles, eyeliners, teintures capillaires, produits de coloration de la peau, produits de maquillage semi-permanents (tatouages par exemple).

Avantageusement, cette base de données comporte des informations relatives à la BRDF des produits pour des épaisseurs de dépôt différentes.

L'unité de mesure est avantageusement associée à des moyens de reconnaissance de forme permettant d'identifier des parties du visage.

Ces moyens de reconnaissance de forme sont de préférence agencés pour détecter des rides, ridules ou plis de la peau.

Ainsi, la présence de rides ou ridules sur le visage est avantageusement prise en compte lors du calcul de la BRDF résultante pour traduire le fait par exemple que le produit de maquillage tend à s'accumuler dans les creux formés par ces rides ou ridules.

L'invention a encore pour objet un ensemble constitué d'un dispositif d'aide au maquillage tel que défini plus haut et d'un dispositif permettant de délivrer un produit ayant une BRDF prédéterminée, sélectionné par le dispositif d'aide au maquillage.

Un tel ensemble peut avantageusement être présent sur un lieu de vente de produits cosmétiques.

L'invention a encore pour objet un procédé permettant de simuler l'application d'un produit cosmétique et/ou de soin, comportant les étapes consistant à :

- mesurer des phénomènes locaux d'interaction de la lumière avec une zone du sujet, pour des conditions d'illumination et d'observation connues,
- calculer à partir des mesures effectuées des paramètres permettant de calculer la BRDF de cette zone en fonction de conditions d'illumination et d'observation données,
- sélectionner un produit cosmétique et/ou de soin pour lequel les paramètres servant au calcul de la BRDF sont connus,
- calculer la BRDF résultante de ladite zone après application dudit produit,
- visualiser ladite zone virtuellement maquillée et/ou traitée à partir de la BRDF résultante précédemment calculée, pour des conditions d'illumination et d'observation données.

Dans une mise en oeuvre particulière, les paramètres permettant de calculer la BRDF sont les coefficients d'absorption $\mu_a(\lambda)$ et de diffusion $\mu_s(\lambda)$, le facteur d'anisotropie de la diffusion g, l'indice de réfraction $n(\lambda)$ et le coefficient de rugosité m.

De préférence, le procédé comprend en outre l'étape consistant à sélectionner les conditions d'illumination avec lesquelles doit s'effectuer la visualisation de la zone virtuellement maquillée et/ou traitée.

Ainsi, l'utilisateur peut visualiser le rendu d'un maquillage pour diverses conditions d'éclairage, et choisir le maquillage le plus adapté à un événement donné.

D'autres caractéristiques et avantages de la présente invention apparaîtront à la lecture de la description détaillée qui va suivre, d'un exemple non limitatif de mise en oeuvre de l'invention, et à l'examen du dessin annexé, sur lequel :

- la figure 1 est une vue schématique d'un dispositif d'aide au maquillage conforme à un exemple de mise en oeuvre de l'invention,
- la figure 2 représente de manière schématique en vue de dessus, avec arrachement partiel, la sphère de l'unité de mesure,
- la figure 3 représente le positionnement relatif des différents angles intervenant dans le calcul de la BRDF, et
- la figure 4 est un schéma illustrant différentes fonctions du dispositif.

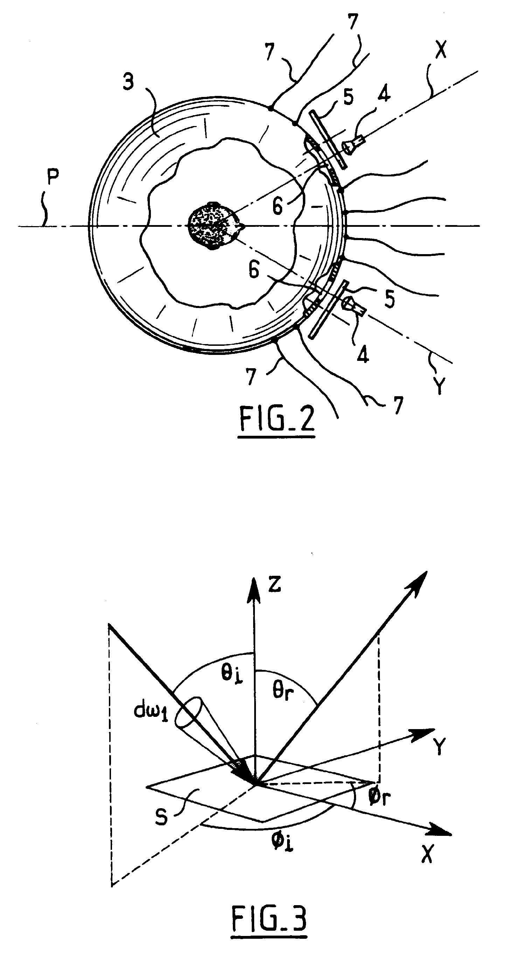

On a représenté sur la figure 3 l'angle solide élémentaire $d\omega_i$ de la lumière incidente sur une surface cible S du sujet, la direction de cette lumière incidente pouvant être repérée de façon conventionnelle dans un repère orthonormé XYZ lié à la surface S par un angle $\theta_i$ avec l'axe Z et un angle $\Phi_i$ avec l'axe X dans le plan XY de la surface S.

La direction de la lumière renvoyée est définie par un angle $\theta_r$ avec l'axe Z et $\Phi_r$ avec l'axe X dans le plan XY.

Au sens de l'invention, la BRDF est définie par la formule suivante :

$$f_r\,(\theta_i,\,\Phi_i,\,\theta_r,\,\Phi_r,\,\lambda) \equiv L_r\,(\theta_r,\,\Phi_r,\,\lambda)\,/\,[L_i\,(\theta_i,\,\Phi_i,\,\lambda).\,\cos\theta_i.d\omega_i]$$

où $L_r$ est la luminance énergétique (ou radiance) renvoyée par un élément de surface et $L_i$ est la luminance énergétique incidente (ou irradiance) pour cet élément de surface.

Pour le détail des paramètres servant au calcul de la BRDF, on se reportera utilement à l'article intitulé *"Comprehensive physical model for light reflection"* paru dans la revue Computer Graphics, 25 (4), August 1991, à celui intitulé *"Reflection from layered surfaces due to subsurface scattering"* du Département Informatique de l'Université de Princeton, qui décrit le calcul de la BRDF en appliquant la méthode de Monte-Carlo, et à l'article de Cook et Torrance "A *reflection Model for Computer Graphics"* paru dans ACM Transaction on Graphics 1(1982) 7- 24.

Dans une mise en oeuvre de l'invention, on utilise pour modéliser la BRDF la méthode de Monte-Carlo associée à la méthode de Cook et Torrance décrite dans l'article ci-dessus.

On peut encore utiliser, à la place de la méthode de Monte-Carlo, la méthode d'Adding et Doubling associée à l'équation du transfert radiatif.

On considère de préférence, dans un souci de simplification, que la lumière n'a pas de polarisation particulière, et que la BRDF du sujet ne dépend pas de l'angle $\phi_i$.

La méthode de Monte-Carlo fait intervenir les paramètres $\mu_a\,(\lambda)$ d'absorption de la zone du sujet concernée (par exemple la peau) en fonction de la longueur d'onde $\lambda$, $\mu_s\,(\lambda)$ de diffusion de ladite zone, et un facteur d'anisotropie de la diffusion g, déterminé par la fonction de Henyey et Greenstein, de manière bien connue de l'homme du métier.

La méthode de Cook et Torrance fait intervenir les paramètres indice de réfraction n $(\lambda)$ à la longueur d'onde X et coefficient de rugosité m.

Ainsi, dans une mise en oeuvre préférée de l'invention, la BRDF est calculée pour des angles $\theta_i$, $\theta_r$, $\phi_r$ donnés et une longueur d'onde $\lambda$, à partir des cinq paramètres mentionnés plus haut.

Ces paramètres sont calculés à partir des mesures effectuées sur le sujet.

Plus particulièrement, on effectue des mesures locales permettant de connaître la valeur de la BRDF en plusieurs points du sujet pour des conditions d'illumination connues et dans des directions d'observation connues, pour différentes longueurs d'ondes connues $\lambda$.

Ensuite, on cherche la valeur à attribuer à chacun des paramètres $\mu_a\,(\lambda)$, $\mu_s\,(\lambda)$, g, n $(\lambda)$ et m de la BRDF pour faire coïncider les valeurs de la BRDF calculées et les valeurs découlant des mesures.

Dans l'exemple de réalisation décrit, pour calculer les paramètres $\mu_a\,(\lambda)$ et $\mu_s\,(\lambda)$, on considère que la peau est constituée par la superposition de trois couches aux propriétés optiques différentes, à savoir le stratum, l'épiderme et le derme.

On néglige dans cette modélisation l'effet de diffusion induit par le stratum.

Le coefficient de rugosité m, calculé par ailleurs, permet de tenir compte indirectement de l'incidence du stratum sur la réflexion, la transmission et l'absorption de la lumière.

On considère que la couleur de l'épiderme dépend du taux de mélanine, qui peut varier d'un sujet à l'autre.

On considère également que la couleur du derme dépend du taux de sang et de son degré d'oxydation.

On calcule les valeurs à donner aux variables taux de mélanine, taux de sang et degré d'oxydation afin de faire coïncider la réflectance spectrale issue du calcul avec la réflectance spectrale mesurée.

Une fois les taux de mélanine, taux de sang et taux d'oxydation déterminés par le calcul, on en déduit les paramètres $\mu_a$ ($\lambda$) et $\mu_s$ ($\lambda$) pour le derme et l'épiderme en utilisant les données de la littérature.

On se reportera utilement à ce sujet, à l'article *"skein optics"*, Oregon Medical laser center News, Janvier 1998, Steven L. Jacques.

Pour effectuer les calculs permettant de déterminer les taux de mélanine, taux de sang et degré d'oxydation, on peut utiliser des techniques de calcul telles que celles de Newton Raphson, du Simplex ou du Recuit Simulé.

Pour déterminer le coefficient de rugosité m, on peut mesurer l'intensité lumineuse réfléchie dans le plan d'incidence en fonction de l'angle d'observation pour une lumière incidente polarisée parallèlement à la surface éclairée et une lumière incidente polarisée perpendiculairement à cette surface.

Par différence, on obtient une information permettant de calculer le coefficient de rugosité m.

Une fois les paramètres $\mu_a$ ($\lambda$), $\mu_s$ (k) , g, n ($\lambda$), et m déterminés, la BRDF peut être calculée en fonction des variables $\theta_i$, $\theta_r$, $\phi_r$ et $\lambda$ pour les besoins de la simulation.

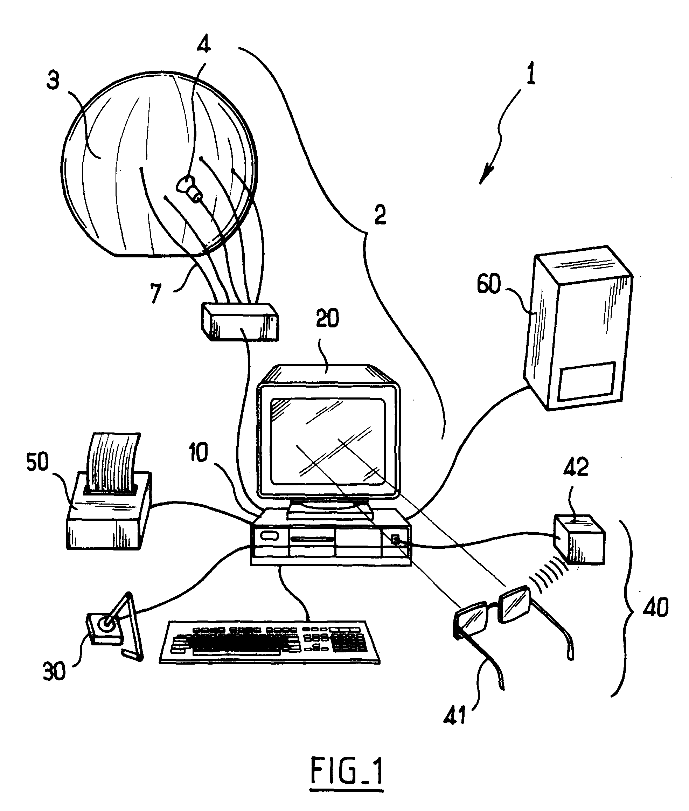

On a représenté sur la figure 1 un dispositif 1 d'aide au maquillage conforme à un exemple non limitatif de mise en oeuvre de l'invention.

Ce dispositif 1 comporte une unité de mesure 2 de phénomènes locaux d'interaction de la lumière avec une zone à maquiller, par exemple le visage ou une partie de celui-ci.

L'unité de mesure 2 comporte, comme représenté plus particulièrement sur la figure 2, une sphère 3 dont la surface intérieure est noire et à l'intérieur de laquelle une personne se place lors de la mesure de données optiques locales de son visage ou d'une partie de celui-ci.

Deux caméras 4 sont agencées pour observer simultanément en stéréovision le sujet placé dans la sphère, au travers de filtres chromatiques 5 et d'ouvertures 6 pratiquées dans la sphère, les directions d'observation des caméras faisant un angle entre elles, l'une permettant par exemple d'acquérir une vue de face et l'autre, une vue de profil, ou chacune une vue de quart comme représenté.

Les caméras 4 permettent, entre autres, d'acquérir des informations relatives à la topographie du visage.

Des moyens d'éclairage sont prévus pour éclairer le sujet avec différentes directions d'incidence connues.

Ces moyens d'éclairage comportent dans l'exemple décrit une pluralité de fibres optiques 7.

Les filtres chromatiques 5 sont disposés par exemple sur des disques pouvant être entraînés en rotation, de manière à placer différents filtres devant l'objectif de chaque caméra 4 en tournant les disques.

On comprend qu'en éclairant le sujet d'une manière prédéterminée à partir de plusieurs points répartis à la surface de la sphère et en faisant pour chaque condition d'illumination des acquisitions d'images à différentes longueurs d'ondes grâce aux filtres 5, on obtient des informations représentatives des phénomènes locaux d'interaction de la lumière avec une zone du sujet, par exemple de sa peau au niveau du visage.

On peut effectuer ainsi des mesures permettant de déterminer la réflectance spectrale de la zone à maquiller.

Le sujet placé dans la sphère peut aussi être éclairé successivement avec des longueurs d'ondes différentes, auquel cas il n'est pas nécessaire de placer des filtres chromatiques devant les caméras.

L'unité de mesure comporte également des moyens permettant de mesurer l'intensité lumineuse réfléchie dans le plan d'incidence pour une lumière incidente polarisée parallèlement à la surface éclairée et perpendiculairement à cette surface, en vue de calculer le paramètre de rugosité m comme expliqué plus haut.

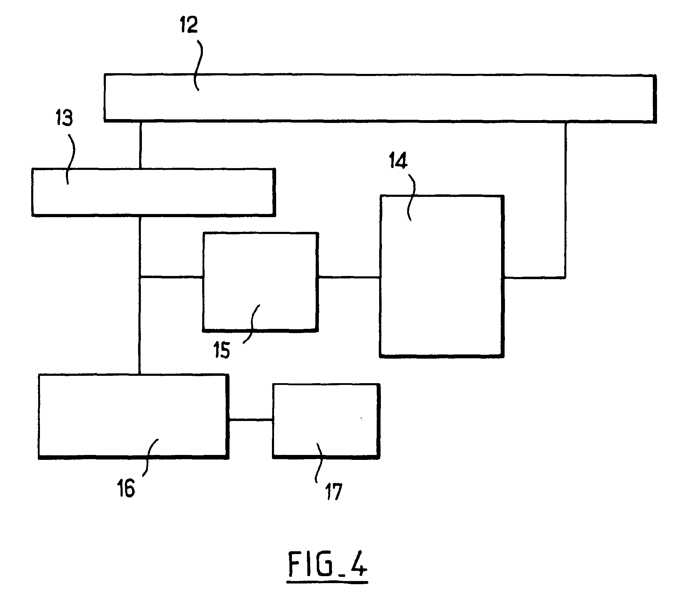

En revenant à la figure 1, le dispositif d'aide au maquillage comporte un micro-ordinateur 10 programmé pour accomplir différentes fonctions illustrées sur le schéma en blocs de la figure 4.

Plus particulièrement, le micro-ordinateur 10 comporte des moyens de calcul et d'interface 12 permettant de gérer l'acquisition des images.

Ces moyens de calcul et d'interface 12 sont avantageusement agencés pour effectuer le calibrage des caméras conformément au brevet français n° 96 06425 de la société demanderesse.

Le micro-ordinateur 10 comporte également des moyens de calcul 13 mettant en oeuvre des procédés de calcul permettant notamment de reconnaître à partir des images acquises différentes parties du visage et de détecter le cas échéant la présence de rides ou ridules.

Les procédés de calcul permettant de reconnaître des formes sont bien connus et l'on pourra se reporter par exemple à la demande internationale WO 96/21201 précitée ou à l'article intitulé *"Physically-based wrinkle simulation and skin rendering"* de MIRALab, University of Geneva (1998).

Le micro-ordinateur 10 comporte encore une base de données 14 de la BRDF de différents produits cosmétiques ainsi qu'une base de données 15 relatives à la modélisation du dépôt de ces produits sur la zone à maquiller.

La BRDF des produits dépend de la quantité étalée sur la peau.

La base de données 14 en tient compte.

Le micro-ordinateur 10 comporte aussi un système expert 16 permettant de déterminer, en fonction d'une base 17 de règles esthétiques, le produit de maquillage à appliquer.

Il peut s'agir par exemple de déterminer la couleur du produit à appliquer en fonction de données renseignées par l'utilisateur concernant par exemple son type de peau, la couleur de ses yeux ou de ses cheveux et/ou de données provenant de l'unité d'acquisition concernant la physionomie du sujet.

Le dispositif 1 d'aide au maquillage comporte par ailleurs un écran 20, un organe de commande 30 constitué par une souris à retour de force, un dispositif de visualisation stéréoscopique 40 et une imprimante 50.

La souris à retour de force 30 permet à l'utilisateur d'entrer des informations relatives à la manière d'appliquer le produit cosmétique.

Ainsi, l'utilisateur peut, en manipulant l'organe de commande 30, simuler le maquillage au moyen d'un crayon et l'obtention d'une marque plus ou moins fortement colorée selon la pression exercée sur l'organe de commande 30.

Le dispositif de visualisation stéréoscopique 40 comporte par exemple, comme illustré, une paire de lunettes ayant des obturateurs à cristaux liquides commandés alternativement en obturation par un dispositif de commande 42, en synchronisme avec des images sur l'écran 20 destinées respectivement à l'oeil gauche et à l'oeil droit.

Le fonctionnement du dispositif 1 est le suivant.

L'utilisateur se place dans la sphère 3 et un programme d'acquisition de la topographie du visage et de données locales est lancé.

A partir des mesures effectuées, le micro-ordinateur 10 calcule les paramètres $\mu_a (\lambda)$, $\mu_s (\lambda)$, g, n $(\lambda)$ et m de la BRDF de la manière exposée plus haut.

Un produit cosmétique et/ou de soin est sélectionné par l'utilisateur ou par le système expert 16, des données relatives aux paramètres de la BRDF de ce produit cosmétique en fonction de son épaisseur de dépôt étant contenues dans la base de données 14.

Le micro-ordinateur 10 calcule la BRDF résultante, à partir de paramètres de la BRDF du sujet, de ceux de la BRDF du produit cosmétique sélectionné et de données de modélisation du dépôt de ce produit cosmétique sur le visage, notamment l'épaisseur de dépôt, provenant de la base de données 15, ces données étant le cas échéant complétées ou modifiées en fonction des informations résultant du maniement de la souris à retour de force 30.

On peut éventuellement modifier le choix de la couleur du produit.

L'utilisateur précise avantageusement les conditions d'ambiance, par exemple lumière du jour, éclairement diffus ou directionnel, lumière artificielle de type fluorescent ou incandescent.

Une fois les paramètres de la BRDF résultante calculés, l'image du visage virtuellement maquillé est affichée à l'écran 20, l'utilisateur pouvant l'observer en stéréoscopie grâce au dispositif de vision stéréoscopique 40.

On peut faire varier la direction d'observation du visage virtuellement maquillé à l'écran, en faisant tourner la tête.

Bien entendu, l'invention n'est pas limitée à l'exemple de réalisation qui vient d'être décrit.

On peut ainsi ajouter au dispositif d'aide au maquillage, un dispositif de formulation 60 relié au micro-ordinateur 10, permettant par exemple de fabriquer un produit de maquillage ayant la couleur et le cas échéant des effets directionnels souhaités si celui-ci n'est pas disponible en stock.

On pourra se reporter, à ce sujet, au brevet US 5 163 010 par exemple.

**Revendications**

1. Dispositif d'aide au maquillage, caractérisé par le fait qu'il comporte :

   - une unité de mesure (2) de phénomènes locaux d'interaction de la lumière avec une zone à maquiller et/ou à traiter,
   - une base (14) de données relatives à la BRDF de différents produits cosmétiques et/ou de soin,
   - des moyens de sélection (10) permettant de sélectionner un produit,
   - des moyens de calcul (13) pour calculer la BRDF résultante de la zone virtuellement maquillée ou traitée avec ce produit, à partir des mesures précédemment effectuées et d'informations relatives à la BRDF du produit de maquillage sélectionné, provenant de ladite base (14) de données, et
   - des moyens de visualisation (20, 40) de la zone ainsi virtuellement maquillée ou traitée en fonction de la BRDF résultante précédemment calculée.

2. Dispositif d'aide au maquillage selon la revendication 1, caractérisé par le fait qu'il comporte des moyens de calcul (12) agencés pour calculer des paramètres de la BRDF de la zone à maquiller et/ou à traiter à partir des mesures effectuées.

3. Dispositif selon la revendication 2, caractérisé par le fait que les paramètres servant au calcul de la BRDF sont les coefficients d'absorbtion $\mu_a (\lambda)$, de diffusion $\mu_s (\lambda)$, d'anisotropie de la diffusion g, l'indice de réfraction n $(\lambda)$, et

le coefficient de rugosité m, λ étant la longueur d'onde de la lumière.

4. Dispositif selon la revendication précédente, caractérisé par le fait que les paramètres $\mu_a$ (λ) et $\mu_s$ (λ) de la peau sont calculés en utilisant un modèle faisant intervenir comme variables le taux de mélanine dans l'épiderme, le taux de sang dans le derme et son degré d'oxydation.

5. Dispositif d'aide au maquillage selon l'une quelconque des revendications précédentes, caractérisé par le fait qu'il comporte un organe de commande (30) permettant à l'utilisateur d'entrer des informations liées à la manière dont le produit cosmétique est destiné à être appliqué sur le visage.

6. Dispositif d'aide au maquillage selon la revendication précédente, caractérisé par le fait que l'organe de commande comprend une souris à retour de force (30).

7. Dispositif d'aide au maquillage selon l'une quelconque des revendications précédentes, caractérisé par le fait qu'il comporte un système expert (16) qui, à partir de données renseignées par l'utilisateur, sélectionne en fonction de critères prédéterminés un produit de maquillage.

8. Dispositif selon l'une quelconque des revendications précédentes, caractérisé par le fait que les moyens de visualisation (20, 40) comportent des moyens d'affichage stéréoscopiques.

9. Dispositif d'aide au maquillage selon l'une quelconque des revendications précédentes, caractérisé par le fait que l'unité de mesure comporte une sphère (3) munie de moyens d'illumination du sujet présent dans la sphère et de moyen d'acquisition d'images agencés pour permettre l'acquisition de données locales du sujet.

10. Dispositif d'aide au maquillage selon l'une quelconque des revendications précédentes, caractérisé par le fait que l'unité de mesure comporte un dispositif d'acquisition de la topographie du visage choisi parmi les dispositifs suivants : dispositif de stéréovision par acquisition simultanée d'une vue de profil et d'une vue de face ; dispositif de triangulation par laser ; dispositif de projection de franges.

11. Dispositif d'aide au maquillage selon l'une quelconque des revendications précédentes, caractérisé par le fait que l'unité de mesure comporte un dispositif d'acquisition de la réflectance spectrale du visage permettant de connaître la couleur du visage en un ensemble de points, pour un angle d'illumination et une direction d'observation donnés.

12. Dispositif d'aide au maquillage selon l'une quelconque des revendications précédentes, caractérisé par le fait que la base (14) de données relatives à la BRDF de produits cosmétiques et/ou de soin comporte des données relatives à la BRDF de produits choisis dans la liste suivante : fonds de teints, rouges à lèvres, fards à joues, fards à paupières, mascara, vernis à ongles, eyeliners, teintures capillaires, produits de colorations de la peau, produits de maquillage semi-permanents (tatouages par exemple).

13. Dispositif selon la revendication précédente, caractérisé par le fait que ladite base de données (14) comporte des informations relatives à la BRDF des produits pour des épaisseurs de dépôt différentes.

14. Dispositif d'aide au maquillage selon l'une quelconque des revendications précédentes, caractérisé par le fait que l'unité de mesure est associée à des moyens de reconnaissance de forme (13) permettant d'identifier des parties du visage.

15. Dispositif d'aide au maquillage selon la revendication précédente, caractérisé par le fait que les moyens de reconnaissance de forme sont agencés pour détecter des rides ou ridules.

16. Ensemble constitué d'un dispositif d'aide au maquillage tel que défini dans l'une quelconque des revendications précédentes et d'un dispositif (60) permettant de délivrer un produit ayant une BRDF prédéterminée, sélectionné par le dispositif d'aide au maquillage (1).

17. Procédé permettant de simuler l'application d'un produit cosmétique et/ou de soin, comportant les étapes consistant à :

- mesurer des phénomènes locaux d'interaction de la lumière avec une zone du sujet, pour des conditions d'illumination et d'observation connues,

- calculer à partir des mesures effectuées des paramètres permettant de calculer la BRDF de cette zone en fonction de conditions d'illumination et d'observation données,
- sélectionner un produit cosmétique et/ou de soin pour lequel les paramètres servant au calcul de la BRDF sont connus,
- calculer la BRDF résultante de ladite zone du sujet après application dudit produit,
- visualiser ladite zone virtuellement maquillée et/ou traitée à partir de la BRDF résultante précédemment calculée, pour des conditions d'illumination et d'observation données.

18. Procédé selon la revendication précédente, caractérisé par le fait que les paramètres permettant de calculer la BRDF sont les coefficients d'absorption $\mu_a (\lambda)$ et de diffusion $\mu_s (\lambda)$, le facteur d'anisotropie de la diffusion g, l'indice de réfraction n $(\lambda)$ et le coefficient de rugosité m.

19. Procédé selon la revendication 17 ou 18, caractérisé par le fait qu'il comprend l'étape consistant à sélectionner les conditions d'illumination avec lesquelles doit s'effectuer la visualisation de la zone virtuellement maquillée et/ou traitée.

FIG.1

FIG.2

FIG.3

FIG_4

## RAPPORT DE RECHERCHE EUROPEENNE

**Office européen des brevets**

Numéro de la demande

EP 00 40 2701

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 226 959 A (HORIKITA TSUKASA) 1 juillet 1987 (1987-07-01) * abrégé * --- | 1-3 | G06F17/00 G06T15/50 A45D44/00 |
| D,Y | HE X D ET AL: "A comprehensive physical model for light reflection" SIGGRAPH 91, LAS VEGAS, NV, USA, 28 JULY-2 AUG. 1991, vol. 25, no. 4, pages 175-186, XP000922854 Computer Graphics, July 1991, USA ISSN: 0097-8930 * page 178, colonne de gauche, alinéa 3.2 - page 179, colonne de droite, alinéa 4 * --- | 1-3 | |
| Y | EP 0 588 243 A (EASTMAN KODAK CO) 23 mars 1994 (1994-03-23) * colonne 5, ligne 14 - ligne 27 * --- | 1-3 | |
| D,Y | FR 2 728 982 A (ROBIN JEAN MARC) 5 juillet 1996 (1996-07-05) * page 1 - page 3 * --- | 1-3 | **DOMAINES TECHNIQUES RECHERCHES (Int.Cl.7)** |
| A | VANNIER M W ET AL: "FACIAL SURFACE SCANNER" IEEE COMPUTER GRAPHICS AND APPLICATIONS,US,IEEE INC. NEW YORK, vol. 11, no. 6, 1 novembre 1991 (1991-11-01), pages 72-80, XP000237431 ISSN: 0272-1716 * figures 2,7 * --- | 10 | G06T |

-/--

Le présent rapport a été établi pour toutes les revendications

| Lieu de la recherche | Date d'achèvement de la recherche | Examinateur |
|---|---|---|
| LA HAYE | 2 novembre 2000 | Perez Molina, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen
des brevets**

**RAPPORT DE RECHERCHE EUROPEENNE**

Numéro de la demande

EP 00 40 2701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PATENT ABSTRACTS OF JAPAN vol. 1999, no. 10, 31 août 1999 (1999-08-31) & JP 11 143352 A (ONISHI NETSUGAKU KOGYOSHO:KK), 28 mai 1999 (1999-05-28) * abrégé * ----- | | |

DOMAINES TECHNIQUES
RECHERCHES (Int.Cl.7)

Le présent rapport a été établi pour toutes les revendications

| Lieu de la recherche | Date d'achèvement de la recherche | Examinateur |
|---|---|---|
| LA HAYE | 2 novembre 2000 | Perez Molina, E |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2701

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-11-2000

| Document brevet cité au rapport de recherche | | Date de publication | Membre(s) de la famille de brevet(s) | | Date de publication |
|---|---|---|---|---|---|
| EP 0226959 | A | 01-07-1987 | JP | 62144280 A | 27-06-1987 |
| | | | CA | 1261967 A | 26-09-1989 |
| EP 0588243 | A | 23-03-1994 | US | 5381526 A | 10-01-1995 |
| | | | DE | 69323371 D | 18-03-1999 |
| | | | DE | 69323371 T | 09-09-1999 |
| | | | JP | 6162169 A | 10-06-1994 |
| FR 2728982 | A | 05-07-1996 | AU | 4452296 A | 24-07-1996 |
| | | | WO | 9621201 A | 11-07-1996 |
| JP 11143352 | A | 28-05-1999 | AUCUN | | |

EPO FORM P0460

Pour tout renseignement concernant cette annexe : voir Journal Officiel de l'Office européen des brevets, No.12/82